**Europäisches Patentamt**

**European Patent Office**

**Office européen des brevets**

(19)

(11) Veröffentlichungsnummer: **0 278 539 B1**

## (12) EUROPÄISCHE PATENTSCHRIFT

(45) Veröffentlichungstag der Patentschrift:
**11.10.89**

(21) Anmeldenummer: **88200034.2**

(22) Anmeldetag: **13.01.88**

(51) Int. Cl.⁴: **B03C 3/01, C01B 17/76**

(54) Konditionierverfahren für staubhaltige Abgase.

(30) Priorität: **04.02.87 DE 3703266**

(43) Veröffentlichungstag der Anmeldung:
**17.08.88 Patentblatt 88/33**

(45) Bekanntmachung des Hinweises auf die Patenterteilung:
**11.10.89 Patentblatt 89/41**

(84) Benannte Vertragsstaaten:
**AT DE ES FR GB IT**

(56) Entgegenhaltungen:
**EP-A- 0 062 930**
**EP-A- 0 062 930**
**US-A- 3 689 213**
**US-A- 4 466 815**

**TECHNISCHE MITTEILUNGEN KRUPP.**
**WERKSBERICHTE, Band 41, Nr. 2, Juli 1983,**
**Seiten 89-102, Essen, DE; H.J. GOMOLL et al.:**
**"SO3-Konditionierung verbessert die elektrostatische**
**Abscheidefähigkeit bei hochohmigen Flugaschen"**

(73) Patentinhaber: **METALLGESELLSCHAFT AG,**
**Reuterweg 14 Postfach 3724, D-6000 Frankfurt/M.1(DE)**

(72) Erfinder: **Leussler, Wilhelm, Westerbachstrasse 255,**
**D-6230 Frankfurt 80(DE)**

(74) Vertreter: **Müller, Kurt, Metallgesellschaft AG**
**Postfach 3724, D-6000 Frankfurt am Main 1(DE)**

**Beschreibung**

Die Erfindung bezieht sich auf ein Verfahren zum Konditionieren eines staubhaltigen Abgasstroms vor dessen Eintritt in einen elektrischen Staubabscheider durch Zugabe eines $SO_3$-haltigen Konditionierungsgases unter Verwendung einer $SO_3$-Erzeugungseinrichtung, bestehend im wesentlichen aus

a) einem Ofen und einer Zuleitung für flüssigen Schwefel und einer Zuleitung für Verbrennungsluft sowie mit einer Gasaustrittsleitung

b) einem katalytisch arbeitenden Konverter, der an die Gasaustrittsleitung angeschlossen ist,

c) einer Gasförderleitung zwischen Konverter und Abgaskanal mit endseitigen Verteileinrichtungen,

d) einer Einrichtung zum Fördern und Dosieren von flüssigem Schwefel in Abhängigkeit von einer für den Bedarf an Konditionierungsgas repräsentanten Meßgröße,

e) einem Gebläse zum Fördern einer ausreichenden Luftmenge sowie

f) einem Lufterhitzer zwischen Gebläse und Ofen, dessen Leistung direkt in Abhängigkeit von der geforderten Schwefelmenge so gesteuert wird, daß die Summe der dem Ofen mit dem Schwefel und mit der erwärmten Luft zugeführten Energie konstant ist.

Ein derartiges Verfahren ist aus der EP-A-0 062 930 bekannt. Es unterscheidet sich von anderen vorbekannten Verfahren im wesentlichen dadurch, daß die $SO_3$-Erzeugungseinrichtung durch ein äußeres Signal auf den jeweiligen $SO_3$-Bedarf eingestellt wird, daß die wesentliche Funktion intern aber von einer einfachen Steuerung übernommen wird, die gewährleistet, daß dem Ofen für die Schwefelverbrennung stets eine konstante Energiemenge zugeführt wird, wodurch auf einfache Weise die Ausgangstemperatur im wesentlichen konstant gehalten werden kann.

Bei diesen bekannten Verfahren ist außerdem noch eine Vielzahl weiterer Regelungs- und Korrekturmöglichkeiten vorgesehen, woraus sich für den Fachmann ergibt, daß die im Mittelpunkt stehende zentrale Steuerung entweder allein nicht geeignet ist, das komplexe Regelproblem zu lösen oder abar komplizierte Sekundärregelkreise erfordert, um allfällige Schwankungen, beispielsweise der Umgebungstemperatur auszugleichen.

Der Erfindung liegt die Aufgabe zugrunde, das bekannte Verfahren in diesem Punkt noch zu verbessern und zu vereinfachen und insbesondere eine klare Regel- und Steuerstruktur vorzuschlagen, bei der sicherheitstechnische Erfodernisse nicht vernachlässigt werden müssen.

Zur Lösung dieser Aufgabe wird vorgeschlagen, daß bei dem eingangs genannten Verfahren dem Lufterhitzer eine konstante Luftmenge zugeführt wird, die 4,5 bis 5 mal so groß ist wie die zur stöchiometrischen Verbrennung der maximal vorgesehenen Schwefelmenge erforderliche, und daß die dem Lufterhitzer zugeführte Luftmenge auf eine konstante Temperatur geregelt wird.

Dabei kann die Luftmenge in an sich bekannter Weise mittels Blende und Regelventil auf einen konstanten Wert eingeregelt werden. In weiterer Ausgestaltung des Erfindungsgedankens ist vorgesehen, daß zwischen Gebläse und Lufterhitzer ein Hilfs-Lufterhitzer vorgesehen ist, der in Abhängigkeit von einer zwischen Hilfs-Lufterhitzer und Lufterhitzer gemessenen Temperatur geregelt wird.

Aus Sicherheitsgründen ist ferner vorgesehen, daß die Schwefelförderung unterbrochen wird (bzw. gesperrt bleibt), wenn die Temperatur im Bereich der Verteileinrichtung für das $SO_3$-haltige Konditionierungsgas einen im Hinblick auf die Vermeidung der Schwefelsäurekorrosion kritischen Wert unterschreitet (bzw. - ausgehend von niedrigeren Temperaturen - noch nicht erreicht hat).

In weiterer Ausgestaltung des erfindungsgemäßen Verfahrens unter sicherheitstechnischen Gesichtspunkten kann eine zwischen Gebläse und Regelventil abzweigende und direkt in den Ofen führende Bypaß-Leitung mit Regelventil vorgesehen werden, durch die bei Überschreiten einer Grenztemperatur im Ofen Kühlluft in den Ofen gefördert wird. Vorteilhaft ist es ferner, wenn stromab vom Konverter eine Temperaturmeßstelle vorgesehen wird und wenn bei Überschreiten einer Grenztemperatur die Schwefelzufuhr und die Lufterhitzerleistung sofort völlig abgeschaltet werden und wenn das Regelventil in der Bypaß-Leitung sofort völlig geöffnet wird. Schließlich ist noch vorgesehen, daß zur Bestimmung des Bedarfs an Konditionierungsgas im Abgasstrom hinter dem elektrostatischen Staubabscheider eine Einrichtung zur Messung des Reingasstaubgehaltes vorgesehen ist oder daß man für den gleichen Zweck eine Einrichtung zur Messung der Abgasmenge vorsieht.

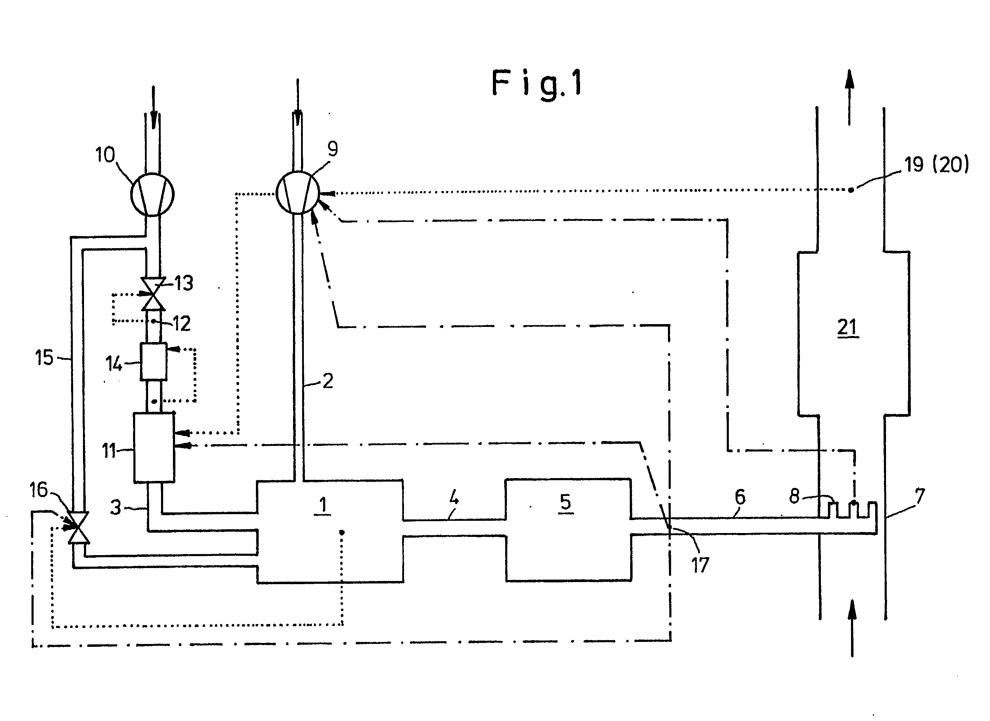

Weitere Einzelheiten des erfindungsgemäßen Verfahrens werden anhand des in Figur 1 dargestellten Schaltungsbeispiels näher erläutert.

In den Ofen 1 für die Verbrennung von Schwefel wird über die Leitung 2 flüssiger Schwefel und über die Leitung 3 Verbrennungsluft eingespeist und über die Gasaustrittsleitung 4 ein Gemisch aus Luft und Verbrennungsprodukten abgeführt. Die Menge der Verbrennungsluft liegt wesentlich höher als für eine stöchiometrische Verbrennung des Schwefels erforderlich wäre. Sie wird so bemessen, daß das in den Konverter 5 eintretende Gemisch erstens noch genügend Sauerstoff für die katalytische Umwandlung der $SO_2$-Anteile in $SO_3$ enthält und zweitens eine für diese Umwandlung günstige Temperatur aufweist. Diese liegt bei den gebräuchlichen Katalysatoren mit Vanadiumpentoxid bei 420 bis 480°C. Um ferner in dem gesamten System möglichst gleichbleibende Temperatur- und Strömungsverhältnisse einhalten zu können, wird die Luftmenge zudem unabhängig von der jeweiligen Schwefelzufuhr konstant gehalten.

Das $SO_3$-haltige Konditionierungsgas wird durch die Gasförderleitung 6 und die Verteileinrichtungen 8 in den Abgaskanal 7 eingebracht und dort gleichmäßig im Abgasstrom verteilt, bevor dieser in den elektrostatischen Staubabscheider 21 eintritt. Der

Bedarf an $SO_3$ kann durch eine Messung des Reingasstaubgehaltes 19 und/oder der Abgasmenge 20 festgestellt werden. Die Einrichtung 9 zum Fördern und Dosieren des Schwefels ist mit der Meßstelle 19, 20 in einen Regelkreis eingebunden, so daß die Schwefeldosierung selbsttätig auf den jeweiligen Bedarf eingestellt wird.

Die Verbrennungsluft wird über das Gebläse 10 und die Leitung 3 in den Ofen 1 gefördert, wobei mittels Blende 12 und Regelventil 13 für einen konstanten Luftstrom gesorgt wird. Will man im Konverter 5 bei konstanter Luftzufuhr zum Ofen aber wechselnder Schwefelzufuhr eine konstante Temperatur aufrechterhalten, so muß dem Ofen 1 bei Schwefeldosierungen unterhalb der maximal vorgesehenen Menge Energie aus einer anderen Quelle zugeführt werden. Dazu ist nach dem Stand der Technik in der Leitung 3 ein Lufterhitzer 11 vorgesehen, dessen Leistung in Abhängigkeit von der Schwefeldosierung direkt in der Weise gesteuert wird, daß die dem Ofen mit dem Schwefel und mit der (mehr oder weniger) erwärmten Verbrennungsluft insgesamt zugeführte Energie konstant ist. Diese sehr einfache und praktisch verzögerungsfrei arbeitende Steuerung kann jedoch allfällige Schwankungen der Umgebungstemperatur nicht ausgleichen. D.h. die je nach geographischer Lage bis zu 50 oder 60°C betragenden Schwankungen der Lufttemperatur, würden sich ohne zusätzliche Maßnahmen in gleicher Größenordnung im Konverter auswirken. Um dies zu vermeiden und den Konverter immer möglichst eng an der optimalen Temperatur fahren zu können, ist ein Hilfs-Lufterhitzer 14 vorgesehen, der von einer Temperaturmeßstelle zwischen Hilfs-Lufterhitzer 14 und Lufterhitzer 11 geregelt wird und dafür sorgt, daß dem Lufterhitzer 11 ein Luftstrom gleichbleibender Temperatur zugeführt wird. Zusammen mit der Mengenregelung 12/13 ist somit für konstante Eingangsbedingungen am Lufterhitzer 11 gesorgt. Damit ist das Regelsystem für die erfindungsgemäß zu verwendende $SO_3$-Erzeugungseinrichtung komplett.

Die weiteren Maßnahmen sollen lediglich noch sicherstellen, daß beim Anfahren und Abstellen der Anlage sowie bei Störfällen keine Schäden eintreten können. Als erstes ist noch eine Übertemperatursicherung für den Ofen vorgesehen. Es kann nämlich vorkommen, daß der flüssig eingebrachte Schwefel zeitweise nicht vollständig verbrennt, daß damit der $SO_3$-Bedarf nicht gedeckt wird und daß Schwefel im Überschuß in den Ofen gefördert wird. Normalerweise gleicht sich ein solcher Schwefelstau im Ofen durch eine verzögerte, höhere Verbrennungsrate aus, bevor es zu nennenswerten Übertemperaturen kommt. Gelegentlich tritt aber auch ein größerer Schwefelstau auf, der dann - wegen der stets im Überschuß vorhandenen Verbrennungsluft - zu plötzlichen hohen Verbrennungsraten mit entsprechend hoher Übertemperatur führen kann. Für derartige Fälle ist im Ofen 1 ein Temperaturfühler vorgesehen, der auf ein Regelventil 16 in einer Bypaß-Leitung 15 wirkt, durch die nichterwärmte Luft in den Ofen eingebracht werden kann, wodurch Übertemperaturen kurzfristig abgebaut werden können. Diese Maßnahme ist als Regelkreis ausgestaltet, weil es im allgemeinen nicht nötig ist, bei solchen sporadisch auftretenden Übertemperaturen größere Hilfsluftmengen in den Ofen 1 einzubringen und diesen möglicherweise auf eine Temperatur unterhalb der Zündtemperatur abzukühlen.

Anders sieht es bei den übrigen Maßnahmen aus. Sie stellen alle Maßnahmen dar, die für das Inbetriebsetzen der Anlage bzw. für deren Notabschaltung bedeutsam sind (strichpunktierte Linienführung). Ein Temperaturfühler im Bereich der Verteileinrichtung 8 sorgt dafür, daß die Einrichtung 9 zum Fördern und Dosieren von Schwefel nur dann in Betrieb sein kann, wenn an dieser Meßstelle eine genügend hohe Temperatur über der für Schwefelsäurekorrosion kritischen Temperatur gemessen wird. Erst wenn das System durch Einspeisung erwärmter Verbrennungsluft die vorgegebene Temperatur erreicht hat, wird die Einrichtung 9 freigegeben. Umgekehrt wird diese Einrichtung gesperrt, wenn nach irgendwelchen Störungen die vorgegebene Temperatur unterschritten wird.

Schließlich ist noch eine Meßstelle 17 vorgesehen, die im Störfall bei Überschreiten einer Grenztemperatur am Konverterausgang sofort sowohl die Schwefelzufuhr wie auch die Lufterhitzerleistung abschaltet und andererseits das Regelventil 16 voll öffnet, damit die gesamte Einrichtung möglichst schnell gekühlt werden kann. Hierbei handelt es sich um eine Not-Abschaltung der gesamten Anlage, die unmittelbar dazu führt, daß kein $SO_3$ mehr erzeugt wird und ggf. auch Maßnahmen in der Hauptanlage erforderlich sind, aus denen der Abgasstrom stammt. Auf jeden Fall muß danach die $SO_3$-Erzeugungseinrichtung neu in Betrieb genommen werden.

**Patentansprüche**

1. Verfahren zum Konditionieren eines staubhaltigen Abgasstroms vor dessen Eintritt in einen elektrischen Staubabscheider durch Zugabe eines $SO_3$-haltigen Konditionierungsgases unter Verwendung einer $SO_3$-Erzeugungseinrichtung, bestehend im wesentlichen aus

a) einem Ofen 1 und einer Zuleitung 2 für flüssigen Schwefel und einer Zuleitung 3 für Verbrennungsluft sowie mit einer Gasaustrittsleitung 4

b) einem katalytisch arbeitenden Konverter 5, der an die Gasaustrittsleitung 4 angeschlossen ist,

c) einer Gasförderleitung 6 zwischen Konverter 5 und Abgaskanal 7 mit endseitigen Verteileinrichtungen 8,

d) einer Einrichtung 9 zum Fördern und Dosieren von flüssigem Schwefel in Abhängigkeit von einer für den Bedarf an Konditionierungsgas repräsentanten Meßgröße,

e) einem Gebläse 10 zum Fördern einer ausreichenden Luftmenge sowie

f) einem Lufterhitzer 11 zwischen Gebläse 10 und Ofen 1, dessen Leistung direkt in Abhängigkeit von der geförderten Schwefelmenge so gesteuert wird, daß die Summe der dem Ofen 1 mit dem Schwefel und mit der erwärmten Luft zugeführten Energie konstant ist, dadurch gekennzeichnet, daß dem Lufterhitzer 11 eine konstante Luftmenge zugeführt wird, die 4,5 bis 5 mal so groß ist wie die zur stöchiometrischen Verbrennung der maximal vorgesehenen Schwefelmenge erforderliche, und daß die dem Lufterhitzer 11 zugeführte Luftmenge auf eine konstante Temperatur geregelt wird.

2. Verfahren nach Anspruch 1, dadurch gekennzeichnet, daß die Luftmenge in an sich bekannter Weise mittels Blende 12 und Regelventil 13 auf einem konstanten Wert eingeregelt wird.

3. Verfahren nach Anspruch 1 oder 2, dadurch gekennzeichnet, daß zwischen Gebläse 10 und Lufterhitzer 11 ein Hilfs-Lufterhitzer 14 vorgesehen ist, der in Abhängigkeit von einer zwischen Hilfs-Lufterhitzer 14 und Lufterhitzer 11 gemessenen Temperatur geregelt wird.

4. Verfahren nach einem der Ansprüche 1 bis 3, dadurch gekennzeichnet, daß die Schwefelförderung unterbrochen wird (bzw. gesperrt bleibt), wenn die Temperatur im Bereich der Verteileinrichtung 8 für das SO$_3$-haltige Konditionierungsgas einen im Hinblick auf die Vermeidung der Schwefelsäurekorrosion kritischen Wert unterschreitet (bzw. - ausgehend von niedrigeren Temperaturen - noch nicht erreicht hat).

5. Verfahren nach einem der Ansprüche 1 bis 4, dadurch gekennzeichnet, daß eine zwischen Gebläse 10 und Regelventil 13 abzweigende und direkt in den Ofen 1 führende Bypaß-Leitung 15 mit Regelventil 16 vorgesehen ist, durch die bei Überschreiten einer Grenztemperatur im Ofen 1 Kühlluft in den Ofen 1 gefördert wird.

6. Verfahren nach einem der Ansprüche 1 bis 5, dadurch gekennzeichnet, daß stromab vom Konverter 5 eine Temperaturmeßstelle 17 vorgesehen ist und daß bei Überschreiten einer Grenztemperatur die Schwefelzufuhr und die Lufterhitzerleistung sofort völlig abgeschaltet werden und daß das Regelventil 16 der Bypaß-Leitung 15 sofort völlig geöffnet wird.

7. Verfahren nach einem der Ansprüche 1 bis 6, dadurch gekennzeichnet, daß zur Bestimmung des Bedarfs an Konditionierungsgas im Abgasstrom nach dem elektrostatischen Staubabscheider 18 eine Einrichtung 19 zur Messung des Reingasstaubgehaltes vorgesehen ist.

8. Verfahren nach einem der Ansprüche 1 bis 6, dadurch gekennzeichnet, daß zur Bestimmung des Bedarfs an Konditionierungsgas eine Einrichtung 20 zur Messung der Abgasmenge vorgesehen ist.

## Claims

1. A process for conditioning a dust-containing-stream of waste gas before its entry into an electric dust precipitator by adding an SO$_3$-containing conditioning gas, using an SO$_3$-generation apparatus, substantially consisting of

a) furnace 1 and a feed pipe 2 for liquid sulphur and a feed pipe 3 for combustion air, and also with a gas outlet pipe 4,

b) a catalytically operating converter 5 which is connected to the gas outlet pipe 4,

c) a gas supply pipe 6 between the converter 5 and the waste gas duct 7 with distribution devices 8 at the end,

d) a device 9 for supplying and metering liquid sulphur dependent on a measurable variable which is representative of the requirement of conditioning gas,

e) a blower 10 for supplying a sufficient quantity of air and

f) an air heater 11 between the blower 10 and the furnace 1, the capacity of which is controlled directly dependent on the rate of sulphur supplied so that the total of the energy supplied to the furnace 1 with the sulphur and the heated air is constant, characterised in that the air heater 11 is supplied with a constant quantity of air which is 4.5 to 5 times as great as the quantity required for combustion under stoichiometric conditions of the maximum rate of sulphur provided, and that the quantity of air supplied to the air heater 11 is automatically controlled to a constant temperature.

2. A process according to Claim 1, characterised in that the quantity of air is adjusted to a constant value in a known way by means of shutter 12 and control valve 13.

3. A process according to Claim 1 or 2, characterised in that an auxiliary air heater 14 is provided between the blower 10 and the air heater 11 which is automatically controlled dependent on a temperature which is measured between the auxiliary air heater 14 and the air heater 11.

4. A process according to one of Claims 1 to 3, characterised in that the supply of sulphur is interrupted (or remains blocked) when the temperature in the region of the distribution device 8 for the SO$_3$-containing conditioning gas falls below a value which is critical with respect to avoiding sulphuric acid corrosion (or – starting from lower temperatures – has not yet reached said value).

5. A process according to one of Claims 1 to 4, characterised in that a bypass line 15 with a control valve 16 is provided which branches off between blower 10 and control valve 13 and leads directly into the furnace 1, through which line cooling air is supplied into the furnace 1 when a limit temperature is exceeded in the furnace 1.

6. A process according to one of Claims 1 to 5, characterised in that a temperature measuring point 17 is provided downstream from the converter 5 and that when a limit temperature is exceeded the supply of sulphur and the power to the air heater are immediately switched off completely and that the control valve 16 of the bypass line 15 is immediately opened fully.

7. A process according to one of Claims 1 to 6, characterised in that in order to determine the requirement for conditioning gas a device 19 for measuring the dust content of the pure gas is provided in the waste gas stream after the electrostatic dust precipitator 18.

8. A process according to one of Claims 1 to 6, characterised in that a device 20 for measuring the quantity of waste gas is provided in order to determine the requirement for conditioning gas.

## Revendications

1. Procédé de traitement d'un courant d'effluent gazeux contenant de la poussière, avant son entrée dans un séparateur électrique de poussière, par addition d'un gaz de traitement contenant du $SO_3$ en utilisant un dispositif de production de $SO_3$, constitué essentiellement:

a) d'un four (1) et d'un conduit d'amenée (2) de soufre liquide et d'un conduit d'amenée (3) d'air de combustion, ainsi que d'un conduit de sortie des gaz (4);

b) d'un convertisseur (5) opérant catalytiquement qui est relié au conduit de sortie des gaz (4);

c) d'un conduit de transport des gaz (6) entre le convertisseur (5) et un canal pour l'effluent gazeux (7) ayant des dispositifs répartiteurs (8) du côté de l'extrémité;

d) d'un dispositif (9) pour transporter et pour doser du soufre liquide en fonction d'une grandeur de mesure représentant les besoins en gaz de traitement;

e) d'une soufflante (10) pour transporter une quantité d'air suffisante ainsi que;

f) d'un réchauffeur d'air (11) entre la soufflante (10) et le four (1), dont la puissance est commandée directement en fonction de la quantité de soufre exigée, de façon que la somme de l'énergie envoyée au four (1) avec le soufre et avec l'air réchauffé soit constante, caractérisé en ce qu'il consiste à envoyer au réchauffeur d'air (11) une quantité d'air constante qui représente de 4,5 à 5 fois la quantité qui est nécessaire pour la combustion stoechiométrique de la quantité maximum de soufre prévue, et à régler la quantité d'air envoyée au réchauffeur d'air (11) à une température constante.

2. Procédé suivant la revendication 1, caractérisé en ce qu'il consiste à régler la quanitité d'air à une valeur constante, d'une manière en soi connue, au moyen d'un obturateur (12) et d'une vanne de réglage (13).

3. Procédé suivant la revendication 1 ou 2, caractérisé en ce qu'il consiste à prévoir entre la soufflante (10) et le réchauffeur d'air (11) un réchauffeur d'air auxiliaire (14), qui est réglé en fonction d'une température mesurée entre le réchauffeur d'air auxiliaire (14) et le réchauffeur d'air (11).

4. Procédé suivant l'une des revendications 1 à 3, caractérisé en ce qu'il consiste à interrompre le transport de soufre (ou à le laisser fermé) si la température, dans la partie du dispositif répartiteur (8) du gaz de traitement contenant du $SO_3$, devient inférieure à une valeur critique pour empêcher la corrosion par l'acide sulfurique (ou ne l'a pas encore atteine à partir de températures plus basses).

5. Procédé suivant l'une des revendications 1 à 4 caractérisé en ce qu'il consiste à prévoir un conduit de dérivation (15) avec vanne de réglage (16), qui est branché entre la soufflante (10) et la vanne de réglage (13), qui mène directement au four (1) et par lequel de l'air de refroidissement est envoyé au four (1) lorsque la température dans le four (1) devient inférieure à une température limite.

6. Procédé suivant l'une des revendications 1 à 5, caractérisé en ce qu'il consiste à prévoir, en aval du convertisseur (5), un point de mesure de la température (17) et à interrompre entièrement et immédiatement l'envoi de soufre de l'alimentation en puissance du réchauffeur de l'air en cas de dépassement d'une température limite, et à ouvrir entièrement et immédiatement la vanne de réglage (16) du conduit de dérivation (15).

7. Procédé suivant l'une des revendications 1 à 6, caractérisé en ce qu'il consiste, pour déterminer les besoins en gaz de traitement du courant d'effluent gazeux, à prévoir, après le séparateur électrique de poussière (18), un dispositif (19) de mesure de la teneur en poussière du gaz épuré.

8. Procédé suivant l'une des revendications 1 à 6, caractérisé en ce qu'il consiste, pour déterminer les besoins en gaz de traitement, à prévoir un dispositif (20) de mesure de la quantité d'effluent gazeux.

# Fig.1

EP 0 278 539 B1